# EUROPEAN PATENT APPLICATION

(11) **EP 2 301 652 A1**
(43) Date of publication of application: **30.03.2011**
(21) Application number: 10182779.8
(22) Date of filing: 16.12.1999
(51) Int. Cl.: B01D 65/00, B01D 61/10, B01D 63/10

(54) **Housing for a component of a water treatment system**

(62) Divisional of application: 99963653.3
(71) Applicant: WM International Limited, Nassau (BS)
(72) Inventor: Haney, Harold E., 66220, Nuevo Leon (MX); Torres Lobo, Julio, 66220, Nuevo Leon (MX)
(74) Representative: Markham, Jonathan

(57) **Abstract**

A water treatment apparatus utilizes membrane separation technology to separate clean product water from a contaminated water source. The water treatment apparatus comprises an external pressurized raw water source, a raw water inlet, a raw water filter, a main drive pump, a valve arrangement, water treatment means, an inverse flush system having a product accumulator tank and an inverse flow pump, a pair of separation chambers, a recirculation pump set, treated output water storage means, an external fast flush water supply, and a waste water discharge. Ducting connects these components and communicates water therebetween. A cylindrical housing formed of high density polyethylene surrounds the pump and includes a baffle plate and centering ring assembly for supporting the pump. An end pug is located in place by pins passing though holes in the plug and in the wall of the housing. A further housing of similar construction receives the membrane element (138) and provides ports (92,98) and seal (152) arrangements which act to balance pressure across the membrane (144).

## Description

### FIELD OF THE INVENTION

The present invention relates to a housing for a component of a water treatment apparatus, particularly of the type for enclosing a submersible pump or membrane element of the apparatus.

### BACKGROUND

Water treatment apparatus for separating contaminant free product water from a contaminated raw water supply are well known and have been commercially available for many years. These water treatment apparatus utilize various techniques for separating the product water from the contaminated water including filters, membrane separators incorporating reverse osmosis and/or nano-filtration thin film membrane separation technology, and other techniques. These apparatus generally include an untreated raw water source, a main pump or pump set, a valve arrangement, and a water separation device. One or more coarse filters, separation tanks, product water accumulation tanks, and recirculation pumps may also be included. Examples of water treatment apparatus having this general configuration are taught in U.S. Patent 5,795,476 and U.S. patent application 08/762,668 of the present inventor. For completeness, one example of the arrangements described in the above is shown and described in more detail hereinafter.

In smaller water treatment apparatus where separate or dedicated separation tanks are not provided, the water returned from the concentrated waste water outlet stream to the recirculation pumps and water separation device will be higher in total dissolved solids than the incoming raw water and will contain concentrated levels of any contaminates present in the raw incoming water stream. This can cause fouling and failure of the water separation device and the pumps.

Water treatment apparatus of this type may use water cooled submersible pumps as the main and recirculation pumps to increase the efficiency of the water separation process by transferring waste heat to the water thereby increasing the temperature of the water, which in turn increases the efficiency of the water separation process. These pumps require a sealed housing to enclose the pump and to contain the water which flows around and through the pump.

Conventional and currently available pump housings in smaller systems are usually hollow and cylindrical with a removable end plug at one end allowing access to the housing for maintenance and removal of the pump. Likewise membrane housings used with smaller systems usually also incorporate an end plug that slips and locks into place within the main body of the membrane housing. In designs utilizing end plugs, the end plug is often constructed of machined bar stock materials exhibiting both flat top and bottom surfaces. The end plugs are secured in place by various methods. Current methods for holding the plug in place are not very efficient. Although theses methods work in a satisfactory way they tend to cause excessive wear to the plug and housing shortening the life of both.

One method of securing the end plug is to use two or more locking pins or locking bars which slide through the main housing body of the pump or membrane housing. The locking bars are arranged to extend laterally through the housing above the end plug and engage the top of the end plug. With this method, the end plug is pushed beyond the end of the housing main body such that the two locking pins or locking bars may be accommodated. The locking pins or bars are generally constructed of stainless steel, or other similarly hard materials, having sufficient strength to prevent the end plug from being pushed out of the main housing body when the system is under pressure.

A second common method of holding the end plug in place within the housing makes use of a snap -ring. The main housing body is grooved to accept a snap-ring. The end plug is pushed beyond the area where the snap-ring groove is located and then the snap-ring is installed. A third method uses interlocking rings applied using a technique similar to that of the snap-rings.

These currently available end plug designs and the methods for holding the end plugs in place are very inefficient and require the use of expensive rigid or hard materials of construction such as PVC (with or without reinforcing rings), mild steel, stainless steel, acrylics, etc. Although these methods and materials work in a satisfactory way, the materials used in the construction are very expensive to purchase and machine. The materials of construction of both the main housing body and locking pins or bars also tend to exhibit rapid wear and deformation, even when constructed with these rigid materials.

This wear and deformation is due to the extreme forces applied to the end plug from the pressurized water stream and high velocity water stream hitting the plug and causing stress. The materials that are exposed to these stresses can wear down fast. The forces against the end plug are directly transferred to the end plug retaining mechanism, causing wear and deformation. Soft materials cannot be used with these conventional end plug retaining mechanisms as deformation of a soft material would result in rapid failure. Further more the forces pass through the plug to the point where the plug is attached to the wall of the housing causing continuous stress to it and eventually wearing it down. Shock is transmitted through the plug to the wall causing the wall to wear down. This shortens life of the housing.

Another disadvantage is that the plug is free to rotate as water pulses and flows around it. A further disadvantage is that conventional designs require the use of hard and strong materials to withstand the cyclic forces and water hammering caused by changes in the acceleration of the flow. These materials may fracture due to stress or shock and may become brittle at low temperatures leaving them more susceptible to damage. For water treatment systems installed in environments that have low temperatures, freezing can exacerbate these problems.

Pump housings of this type also generally include a number of ports for pipe fittings through the end plug. Having more than one port through the end plug requires that longer lengths of pipe be used between the plug and the elbow of the pipe to accommodate the additional ports.

In housings which enclose a membrane element the methods used to mount the membrane element in the housing are usually inefficient and expensive. In conventional housings the membrane element usually sits in solid support within the housing. This reduces the ability of the membrane element to endure shock caused by the water during changes in the rate of water flow. The shock can wear down the membrane element and shortens the life of the element.

As in large water treatment apparatus, housings in smaller systems have a problem with the seals arranged around the membrane element creating a pressure differential between the interior of the membrane element and the exterior of the membrane element in the space between the membrane element and the housing wall. This pressure differential can lead to catastrophic failure of the membrane element.

### SUMMARY OF THE INVENTION

According to a first aspect of the present invention there is provided a housing for use with a water treatment apparatus comprising:
a hollow elongate tubular member having an interior surface, an open first end, and a closed second end;
a removable and reengageable end plug having a first end for arrangement adjacent the open first end of the tubular member and a cylindrical body sized and arranged for slidable engagement within the open first end of the tubular member thereby closing the open first end;
and retaining means including:
   at least one removable and reengageable elongate retaining member;
   at least one hole extending laterally through the body of the end plug adjacent the first end thereof and sized to receive the at least one elongate retaining member therethrough;
   at least one hole extending laterally through the tubular member and sized to receive the at least one removable and reengageable elongate retaining member therethrough;
   the at least one removable and reengageable elongate retaining member being arranged such that it extends through the at least one hole in the tubular member and the at least one hole in the body of the end plug thereby securing the end plug against longitudinal and rotational motion relative to the tubular member.

Preferably the end plug includes a second end for arrangement within the tubular member facing the closed second end of the tubular member, said second end having a convexly curved face.

Preferably the cylindrical body of the removable and reengageable end plug includes an outer cylindrical surface arranged to slidably engage the interior surface of the tubular member, and a pair of grooves extending around the outer cylindrical surface, each groove being arranged to receive a sealing ring for engaging between the interior surface of the tubular member and the outer cylindrical surface of the end plug thereby preventing pressurized water from passing therebetween.

Preferably the removable and reengageable end plug includes a product water outlet port extending longitudinally through the end plug from the first end to the second end thereof.

Preferably the end plug and tubular member are formed of a resilient plastics material.

Preferably the resilient material is high density polyethylene.

According to a second aspect of the invention there is provided a housing for use with a water treatment apparatus comprising:
a cylindrical membrane element having a first end, a second end, and an outer surface;
a hollow elongate tubular member having an interior surface surrounding the membrane element, an open first end adjacent the first end of the membrane element, and a closed second end adjacent the second end of the membrane element;
a removable and reengagable closing means arranged at the open first end of the tubular member for closing the open first end;
retaining means for retaining the closing means at the open first end of the tubular member;
a first port for communication of water therethrough arranged to extend through the tubular member adjacent the first end of the tubular member;
a second port for communication of water therethrough arranged to extend through the tubular member adjacent the second end of the tubular member; a first seal arranged around the membrane element adjacent one of the first or second ends thereof, such that water entering the corresponding one of the first or second ports adjacent the seal must pass through the membrane element from said one of the first or second ends of the membrane element to the other one of the first or second ends of the membrane element and around the membrane element between the outside surface of the membrane element and the interior surface of the tubular member thereby substantially equalizing a water pressure inside the membrane element with a water pressure outside the membrane element.

Preferably the housing further includes:
a third port for communication of water therethrough arranged to extend through the tubular member and spaced from the first port in a direction towards the second end of the tubular member;
a fourth port for communication of water therethrough arranged to extend through the tubular member and spaced from the second port in a direction towards the first end of the tubular member;
and a second seal arranged around the membrane element adjacent the second end thereof and lying between the second port and the fourth port of the tubular member such that the seal prevents water entering the second port from passing around the membrane element between the outside surface of the membrane element and the interior surface of the tubular member and exiting through the third and fourth ports;
the first seal being arranged around the membrane element adjacent the first end thereof and between the first port and the third port of the tubular member such that the seal prevents water entering the first port from passing around the membrane element between the outside surface of the membrane element and the interior surface of the tubular member and exiting through the third and fourth ports;
the third and fourth ports being arranged to communicate pressurized water having a pressure substantially equal to that of the water passing through the first and second ports to an interior of the tubular member thereby equalizing a water pressure inside the membrane element with a water pressure outside the membrane element.

Preferably the first and second seals are o-ring seals.

Preferably the housing further includes a resilient spacer arranged at each of the first and second ends of the membrane element such that a first one of the resilient spacers engages the first end of the membrane element and the removable and reengageable end plug and such that a second one of the resilient spacers engages the second end of the membrane element and the second end of the housing.

Preferably the tubular member has an inside diameter and wherein the closed second end of the tubular member comprises an end cap sized to have an inside diameter smaller than the inside diameter of the tubular member thereby creating a shoulder inside the housing for supporting the membrane element.

According to a third aspect of the invention there is provided a housing for use with a water treatment apparatus comprising:
a submersible pump having a first end, a second end, an inlet, an outlet, and a body;
a hollow elongate tubular member containing the pump therein having an interior surface, an open first end, and a closed second end and defining a longitudinal center line extending longitudinally through the tubular member;
a removable and reengageable closing means arranged at the open first end of the tubular member for closing the open first end;
retaining means for retaining the closing means at the open first end of the housing;
a first port for communication of water therethrough arranged to extend through the tubular member adjacent the first end of the tubular member;
a second port for communication of water therethrough arranged to extend through the tubular member adjacent the second end of the tubular member;
and a baffle plate and centering ring assembly for securing the pump within the tubular member along the longitudinal center line thereof such that the pump is spaced from the closing means towards the second end of the tubular member with the inlet of the pump positioned to receive water an area from between the baffle plate and centering ring assembly and the second end of the tubular member and the outlet of the pump positioned to lie between the baffle plate and centering ring assembly and the first end of the tubular member.

Preferably the baffle plate and centering ring assembly comprises:
an inner ring arranged concentric to the tubular member having a first end and an inner diameter sized to engage around the body of the pump thereby securing the pump on the longitudinal center line of the tubular member;
a circular conical wall arranged concentric with and spaced outwards from the inner ring, said conical wall including:
   a first end aligned with the first end of the inner ring, said first end having an outer diameter sized such that it engages the inner surface of the tubular member preventing water from passing between the first end of the conical wall and the interior surface of the tubular member and thereby from entering the pump inlet;
   a second end arranged between the pump inlet and the second end of the pump and having an inner diameter sized to surround the body of the pump leaving a small gap therebetween, said gap allowing water adjacent the longitudinal center line of the tubular member to pass between the second end of the conical wall and the pump body and thereby enter the pump inlet;
   and means for connecting the inner ring to the conical wall.

Preferably the means for connecting the inner ring to the conical wall comprise a plurality of webs spaced angularly apart and arranged to extend between a inner surface of the conical wall and the inner ring thereby fixing the inner ring to the conical wall.

Preferably the baffle plate and centering ring assembly is arranged within the tubular member such that the first end of the baffle plate and centering ring assembly is arranged to face the first end of the tubular member and lies between the first port and second port and such that the second end of the baffle plate and centering ring assembly is arranged to face the second end of the tubular member dividing the interior of the tubular member into two portions thereby providing a separation chamber in the portion between the baffle plate and centering ring assembly and the second end of the tubular member.

Preferably the separation chamber is sized and arranged to reduce a pressure and velocity of the contaminated water entering the separation chamber a predetermined amount, and pass said contaminated water through the separation chamber over a predetermined time thereby causing contaminants in the water to precipitate out reducing the contaminants in said water.

Preferably the housing includes a third port for communication of water therethrough arranged to extend through the tubular member adjacent the second end of the tubular member and spaced from the second port in a direction towards the first end of the tubular member between the baffle plate and centering ring assembly and the second port, said third port extending through the tubular member at a compound angle such that water entering the tubular member through the third port is directed around the interior surface of the tubular member and towards the first end thereof thereby forming a vortex within the housing and causing centrifugal forces to be developed on the contaminated water enhancing separation of the contaminants and water.

Preferably the compound angle comprises a 22 degree angle directed towards the interior surface of the tubular member and a 22 degree angle directed towards the first end of the tubular member.

### BRIEF DESCRIPTION OF THE DRAWINGS

In the accompanying drawings, which illustrate an exemplary embodiment of the present invention:
Figure 1 is a schematic layout of a water treatment apparatus from the PRIOR ART as set forth above.
Figure 2 is a cross-sectional view of a housing according to the present invention for use receiving the pump in the apparatus of Figure 1.
Figure 3 is a cross-sectional view of a housing according to the present invention for use receiving the separation membrane in the apparatus of Figure 1.
Figure 4 is a cross-sectional view of an alternative arrangement of the housing for the separation membrane.
Figure 5 is a side view of the end plug of the housing of Figure 2, 3 or 4.
Figure 6 is a top view of the end plug of Figure 5.
Figure 7 is a cross-sectional view of the baffle plate and centering ring of Figure 2.
Figure 8 is a top view of the baffle plate and centering ring of Figure 7.

### DETAILED DESCRIPTION

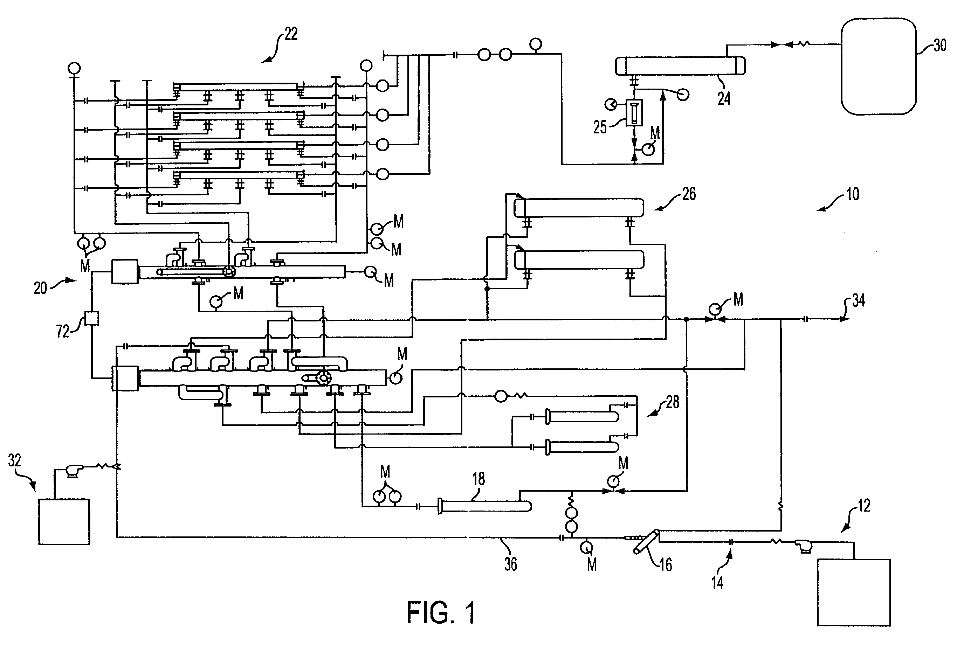

Turning firstly to the prior art arrangement illustrated in Figure 1, the water treatment apparatus 10, illustrated in Figure 1, is of the type utilizing membrane separation technology and comprises an external contaminated raw water source 12, a raw water inlet 14, a coarse filter 16, a main drive pump or pump set 18, a valve arrangement 20, and water separation means 22. This apparatus 10 also includes a product water accumulation tank 24, separation tanks 26, a recirculation pump set 28, treated water output storage tank 30, an external fast flush water supply 32, and a waste water discharge 34. Ducting 36, usually piping, connect these components and allow for communication of water between the components.

The raw water source 12 supplies pressurized raw water to the raw water inlet 14 to be treated by the water treatment apparatus 10. These waters generally contain suspended and dissolved materials, and various chemical and biological contaminates which make the water non-potable or otherwise unusable. The water supply inlet 14 receives raw water from the raw water supply 12 and communicates it via the ducting 36 to a coarse filter 16.

The coarse filter 16 removes large particulates and solids from the feed water stream before the water reaches the main drive pump 18 and/or the recirculation pump set 28.

The main drive pump 18 receives raw water from the filter 16 and increases the pressure of the raw feed water to the required operating pressure and pumps the water through the water separation means 22 and throughout the rest of the water treatment apparatus 10 via the ducting 36.

A valve arrangement 20 comprises one or more flow control valves and provides for full control of the flow of raw and recirculated water through the water treatment apparatus 10. The valve arrangement 20 is arranged to 20 selectively direct water through the water separation means 22. In some systems flow may be directed in both a forward direction and a reverse direction providing for both forward and reverse operation of the apparatus 10 and of the water treatment means 22.

The water separation means 22 comprise one or more membrane element housings 38 each having one or more membrane separation elements (not shown) arranged in series within the housing 38. In small systems the water separation means 22 are usually configured to employ a single membrane separator element or other device arranged within each housing 38.

Pressurized raw water from the main pump 18 is communicated via the ducting 36 and valve arrangement 20 to the raw water inlet of the water separation means 22. In systems where the water separation means 22 is a membrane element the raw water is separated by the membrane element 22 into a concentrated contaminated water outlet stream, and a product water outlet stream. The concentrated contaminated water outlet stream is communicated to the waste discharge 34 and to the recirculation pump(s) 28 for return to the membrane elements 22. All or a portion of the concentrated contaminated water may be returned to the membrane elements 22. The product water outlet stream is communicated to the product water storage means 30 and/or product water accumulation tank 24.

The recirculation purnp(s) 28 receives concentrated contaminated water from the water treatment means 22 and separation tanks 26 and repressurizes the concentrated contaminated water back to full operating pressure. This water is then fed into the raw water stream from the main pump 18 and returned to the water treatment means 22.

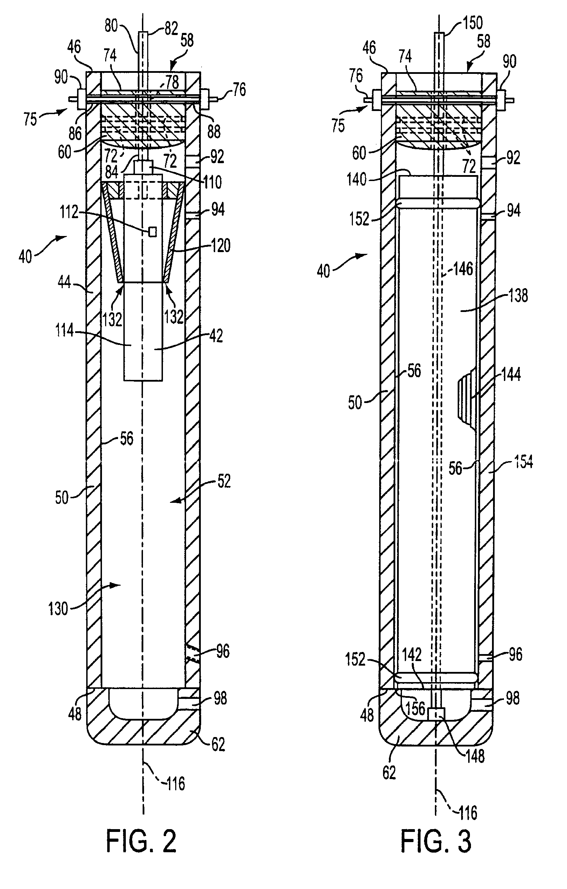

Referring to Figure 2, the housing 40 may be utilized to house a 20 submersible pump 42 in a water treatment apparatus. The housing 40 comprises an elongate hollow tubular member 44 having a first end 46, a closed second end 48, and a cylindrical wall 50. The wall 50 has an interior surface 56 arranged to surround the pump 42 defining the periphery of the internal chamber 52 of the housing 40. The first end 46 of the housing 40 includes an opening 58 and a removable and reengageable end plug 60 for closing the opening 58. The opening 58 is sized to receive the pump 42 therethrough. This allows for periodic removal of the pump 42 for replacement and maintenance. The second end 48 of the housing 40 is closed by an end cap 62 which is welded or otherwise fixed to the second end 48 of the housing 40.

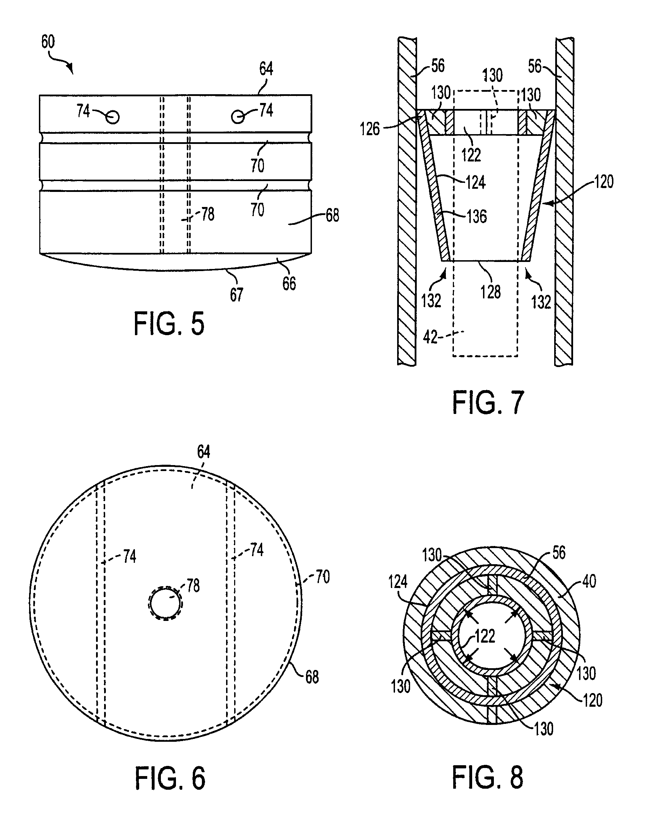

Referring to Figures 2, 5, and 6 the end plug 60 comprises a cylindrical body sized for arrangement within the interior of the housing 40 adjacent the opening 58 in the first end 46 of the housing 40. The end plug 60 has a first end 64, a second end 66, and an outer peripheral surface 68 arranged to slidably engage the interior surface 56 of the housing 40. A pair of grooves 70 extend around the peripheral surface 68 of the end plug 60. Each groove 70 is arranged to receive an O-ring or similar seal holding the seal 72 in place on the end plug 60. The seals 72 are compressed between the interior surface 56 of the housing wall 52 and the outer peripheral surface 68 of the end plug 60 thereby preventing pressurized water from passing between the outer peripheral surface 68 of the end plug 60 and the interior surface 56 of the wall 50 of the housing 40.

A product water outlet port 78 extends longitudinally through the end plug 60 from the first end 64 of the plug 60 to the second end 66 of the plug 60. The outlet 78 port is arranged to receive a fitting 80 therethrough. The fitting 80 is connected at a first end 82 to ducting external to the housing 40 and extends through the end plug 60 to a second end 84 connected to the outlet of the pump 42.

The face 67 of the second end 66 of the end plug 60 faces towards the closed second end 48 of the tubular member 44 and is curved convex outwards in a direction towards the second end 48 of the tubular member 44. The curved face helps reduce the amount of force due to water pressure being transmitted to retaining means 75 which secure the end plug 60 within the housing 40.

The retaining means 75 comprise a pair of holes 74 each extending laterally through the body of the end plug 60, pairs of holes 86 and 88 extending through the housing, and a pair of bolts or retaining pins 76. Each of the pair of holes 74 is sized to receive a bolt or securing pin 76 therethrough. The bolt or pin 76 therefore extends through the body of the end plug 60 when in place.

Two pair of holes 86 and 88 are arranged on opposite sides of the housing 40 and extend through the side of the wall 50 of the housing 40. The pairs of holes 86 and 88 are aligned with one another and are arranged such that individual holes of each respective pair 86 and 88 are spaced apart from one another and align with a corresponding one of the holes 74 extending through the end plug 60. Each individual hole in the pairs of holes 86 and 88 is sized to receive a bolt or securing pin 76 therethrough and to hold the bolt or pin 76 in place with a friction fit.

Each bolt or securing pin 76 when securing the end plug 60 in place extends through one of the lateral holes 74 in the end plug 60 and through the corresponding holes 86 and 88 in the wall 50 of the housing 40. If bolts are used a fastener 90 secures each bolt 76 in place. If a pin is utilized a fastener may not be required.

The bolts or pins 76 fix the end plug 60 in place preventing movement of the end plug 60 longitudinally within the housing 40. Holding the end plug 60 longitudinally in place and utilizing a resilient tough material such as high density polyethylene for construction of the end plug 60 allows the body of the end plug 60 to absorb shock by compressing and expanding. This can reduce wear on the bolts 76 and wall 52 of the housing 40 due to water hammer by absorbing some of the energy of the water through deformation of the end plug 60. This design also prevents rotation of the end plug 60 since the plug 60 is positively fixed in place relative to the housing wall 52. Preventing rotation of the end plug 60 can reduce wear on the end plug seals.

The housing 40 includes four ports 92, 94, 96, and 98 arranged in the side of the housing 40. The ports 92, 94, 96, and 98 are spaced apart from one another and along the length of the housing 40. The first and second ports 92 and 94 are arranged adjacent the first end 46 of the housing 40 with the first port 92 being arranged at a location spaced from the first end 46 of the housing 40 and adjacent the second end 66 of the end plug 60. The second port 94 is spaced from the first port 92 in a direction along the housing 40 towards the second end 48 of the housing 40.

The third and fourth ports 96 and 98 are arranged adjacent the second end 48 of the housing 40. The fourth port 98 is arranged at a location adjacent from the second end 48 of the housing 40. The third port 96 is spaced from the fourth port 98 along the housing 40 in a direction towards the first end 46 of the housing 40.

Having all of the ports extend through the side of the housing 40, with the exception of the product outlet port 78 in the end plug 60, eliminates problems associated with having multiple ports extending through the end cap 60 . In particular this eliminates the plumbing problems which can occur when all of the plumbing passes through the end plug. This is a common practice used with conventional housings and often requires longer lengths of pipe and smaller pipe diameters than would be needed with the improved arrangement.

The first port 92 provides a raw water inlet to the housing 40 and comprises an opening through the wall 50. The opening usually includes internal threading or some other fastening means for connecting directly to pipe or hose or to a fitting which in turn is connected to pipe or hose. The first port 92 receives the raw contaminated water stream.

The second port 94 provides a flush water inlet to the housing 40 and comprises an opening through the wall 50. The opening usually includes internal threading or some other fastening means for connecting directly to the pipe or hose or to a fitting which in turn is connected to pipe or hose. The second port 94 receives flush water from an external flush water source or from product accumulation tanks for use in removing solids accumulated inside the housing.

The third port 96 provides a recirculated concentrated contaminated water inlet to the housing 40 and comprises an opening through the wall 50. The opening usually includes internal threading or some other fastening means for connecting directly to pipe or hose or to a fitting which in turn is connected to pipe or hose.

The opening forming the third port 96 goes through the housing wall 50 at a compound angle to the wall. The compound angle believed to work the best comprises a 22 degree angle directed towards the interior surface 56 of the wall 50 and a 22 degree angle directed upwards slightly towards the first end 48 of the housing 40. This compound angle directs the concentrated contaminated water around the interior surface 56 of the wall 50 of the housing 40 and upwards to form a vortex within the housing 40. The vortex generates a centrifugal force on any sludge, solids, and/or contaminants in the water forcing them outwards towards interior surface 56 of the wall 50.

The fourth port 98 provides a blowdown port for receiving accumulated solids and sludges expulsed or purged from the housing 40 during flushing or a gravity drain and comprises an opening through the wall 50. The opening usually includes internal threading or some other fastening means for connecting directly to pipe or hose or to a fitting which in turn is connected to pipe or hose 36. Contaminated water and separated material exiting the fourth port 98 is usually communicated to a waste water discharge.

The pump 42 may be a water cooled submersible pump or any other appropriate pump. The pump 42 includes an outlet 110, an inlet 112, and 10 a body 114. The pump 42 is arranged within the housing 40 along a longitudinal center line 116 of the housing 40 and is spaced from the first end 46 of the housing 40. The pump 42 is mounted within the housing 40 by a baffle plate/centering ring 120. The inlet 112 of the pump 42 receives contaminated water from above the baffle plate 120 and the outlet 110 communicates repressurized water through the fitting 80 in the end plug 60 external to the housing 40.

Referring to Figures 2, 7 and 8, the baffle plate 120 has an inner ring 122 sized to engage the around the body of the pump 42. A circular conical wall 124 is spaced outwards from the inner ring 122 and extends from a first end 126 to a second end 128. The first end 126 of the conical wall 124 is aligned with a first end 130 of the inner ring 122 and is arranged concentric to the inner ring 122. The first end 126 of the conical wall 124 is arranged to have an outer diameter sized such that it engages the inner surface 56 of the housing 40. The second end 128 has an inner diameter sized to surround the body 114 of the pump 42 leaving a small gap 132 between the second end 128 of the conical wall 124 and the body 114 of the pump 42.

A numberofwebs 134, in this embodiment four, extend between the inner surface 136 of the conical wall 124 and the inner ring 122 thereby fixing the inner ring 122 to the conical wall 124. The inner ring 122 of the baffle plate 120 holds the pump 42 in the center of the housing 40 against movement due to vibrations and other causes.

The baffle plate 120 when installed in the housing 40 is arranged such that the first end 126 of the baffle plate 120 is arranged towards the first end 46 of the housing 40 and between the first port 92 and second port 94. The second end 128 of the baffle plate 120 is arranged towards the second end 48 of the housing 40.

The baffle plate 120 divides the interior chamber 52 of the housing 40 into two providing a separation chamber 130 in that portion of the housing 40 between the baffle plate 120 and the second end 48 of the housing 40. This separation chamber 130 can provide a separation tank in smaller systems or may be used to augment separation tanks in larger systems. The separation chamber 130 collects materials suspended in the concentrated contaminated water prior to the water passing through the pump 42. This occurs because the housing 40 and the opening in the third port 96 are selected to have a diameter sized such that the pressure and velocity of pressurized recirculated concentrated contaminated water entering the housing 40 is reduced a predetermined amount sufficient to cause materials suspended or dissolved in the water to separate out.

The baffle plate 120 also helps prevent sludge, solids, and/or contaminants that enter the housing 40 through the third port 96 from entering the inlet 112 of the pump 42. This is achieved by physically preventing some of the contaminants from passing the baffle plate 120 and entering the pump 42. The recirculated concentrated contaminated water stream entering the housing 40 is directed upwards with a circular motion by the third port 96. The circular motion causes contaminants in the water to collect around the interior surface of the housing wall 56. These contaminants move upwards towards the baffle plate 120. The baffle plate 120 allows water in the center of the housing 40 which is less concentrated due to the circular motion to be drawn through the gap 132 between the second end 128 of the baffle plate 120 and the pump body 114. The water adjacent the interior wall 56 of the housing 40 which contains more sludge, solids, and/or contaminants can not pass between the first end 124 the baffle plate 120 and the interior surface 56 of the housing 40. In this way water containing fewer contaminates passes the baffle plate 120 to the intake 112 of the pump 42 thereby helping to reduce the level of contaminants in the water leaving the pump 42.

In an alternative arrangement the housing 40 may be arranged to operate as a pump housing without also acting as a separation chamber. In this arrangement the third port 96 on the housing 40 is not required and can be either eliminated or plugged.

In another alternative arrangement, shown in Figure 3, the housing 40 may be arranged for housing a membrane element 138. In this embodiment the membrane element 138 is arranged within the housing 40 and extends from a first end 140 to a second end 142. The membrane element 138 comprises a spiral wound water separation membrane 144 and a product water carrier duct 146 which extends longitudinally through the membrane element 138. An end plug 148 closes off the product water carrier duct 146 at the second end 142 of the membrane element 138 while a product water adapter 150 is arranged at the first end 140 of the membrane element 138 to communicate product water from the product water carrier duct 146 through the end plug 60 to ducting external to the housing 40.

The membrane element 138 is arranged such that contaminated water entering the housing 40 is directed to one of the first end 140 or second end 142 of the membrane element 138. This water then flows longitudinally through the element 138 and out the other of the first end 140 or second end 142. The membrane 144 allows a portion of the water flowing through the membrane element 138 to pass into the product water carrier duct 146 as clean water but prevents a second portion of the water and most contaminants from 10 passing. This second portion of the water exits the opposite end of the membrane element as contaminated waste water.

A seal 152 is arranged adjacent each end 140 and 142 of the membrane separator element 138 between the membrane separator element 138 and the interior surface 56 of the wall 50 of the housing 40. The seals 152 are arranged such that the seal adjacent the first end 140 of the membrane element 138 lies between the first port 92 and the second port 94, and the seal adjacent the second end 142 of the membrane element 138 lies between the third port 96 and the fourth port 98. This prevents water entering the housing 40 through one of the first or fourth ports 92 or 98 from merely passing around the membrane element 138 and exiting the housing 40 through the other one of the ports 92 or 98, or the third or fourth ports 94 and 96.

The seals 152 by preventing water from flowing around the membrane element 138 force it to flow through the membrane element 138 creating a pressure differential between the inside of the membrane element 138 and the space 154 between the membrane element 138, the housing wall 50, and the two seals 152. This pressure differential usually comprises an area of higher pressure within the membrane element 138 and an area of lower pressure around the outside of the membrane element 138 between the seals 152. This pressure differential can lead to the catastrophic failure of the membrane element 138.

To reduce this pressure differential the ports 94 and 96 may be utilized to equalize pressure by directing water having a pressure substantially equal to that of the water passing through ports 92 and 98. This equalizes the difference in pressure mentioned above thereby preventing failure of the membrane element 138.

In this arrangement the end cap 62 may be utilized to support the second end 142 of the membrane element 138. The end cap 62 is sized to have a smaller inside diameter than the rest of the housing 40 creating a shoulder 156 inside the housing 40. This shoulder 156 receives the second end 142 of the membrane element 138 supporting it.

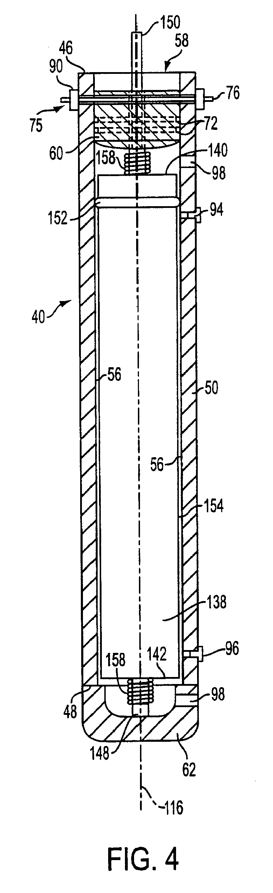

In another alternative embodiment, shown in Figure 4, the housing 40 may include a spring spacer 158 arranged at each end of the membrane element 138 to help reduce shock to the membrane element 138. Having the membrane element 138 sit in solid support can cause damage to the membrane element due to shock caused by the water when stopping or accelerating the flow or when changing the direction of the flow. This shock can wear down the membrane element and shorten its life. This effect can be reduced by adding a spring spacer 158 at each end of the membrane element 138 between the ends of the housing 40 and the membrane element 138. When the flow of water is suddenly stopped or accelerated, or the flow is reversed, some of the shock produced by these actions is absorbed by the spring spacer 158 thereby helping to eliminate shock to the membrane element 138.

In another alternative arrangement, shown in Figure 4, a single seal 152 may be arranged around one end of the membrane element 138. In this case the pressure equalization ports 94 and 96 are not required and may be plugged or eliminated. The single seal 152 is positioned on the membrane element 138 adjacent one end, preferably the first end 140. In this arrangement the seal 152 prevents water entering the first port 92 from passing around the membrane element 138 between the outside of the element and the housing 40. This forces water through the membrane element 138 with concentrated waste water exiting the second end 142 of the membrane element 138. The concentrated waste water then flows around the outside of the membrane element 138 thereby equalizing pressure inside and outside the membrane element and exits the housing 40 through the fourth port 98. If the flow direction is reversed then water enters the fourth port 98 and exits the first port 92. In this case the gap 154 between the membrane element 138 and the housing 40 will fill with water before water is forced into the second end 142 of the membrane element 138 thereby equalizing the pressure inside and outside the membrane element 138. In both these cases the pressure inside and outside the membrane element is maintained substantially equal.

Conventional pump and membrane separator element housings used in water treatment apparatus are made out of various materials. High density polyethylene (HDPE) is less expensive than most materials commonly used in water treatment apparatus and has properties which are superior in many ways to these commonly used materials. HDPE is more elastic and resilient then conventionally used materials making it less likely to fracture when stress is applied. For systems installed in environments that have low temperatures this material receives less damage from freezing. This material is also highly resistant to water hammering. HDPE has good insulating properties and its use has some advantages particularly in systems where the main and/or recirculation pumps are selected to operate near the high end of their operating range to generate excess heat thereby raising the water temperature within the water treatment apparatus and increasing the efficiency of the membrane elements.

The use of HDPE can also create a better seal around the end plug when the housing is under pressure. This results from the fact that HDPE is more elastic than most commonly used housing materials and tends to balloon out slightly at its longitudinal center when under pressure. This ballooning at the center causes a corresponding inward bending of the walls adjacent each end of the housing. This inward bending applies an inward pressure to the seals around the end plug which increases the effectiveness of the seals as pressure increases.

Since various modifications can be made in my invention as herein above described, and many apparently widely different embodiments of same made within the spirit and scope of the claims without departing from such spirit and scope, it is intended that all matter contained in the accompanying specification shall be interpreted as illustrative only and not in a limiting sense.

The following numbered clauses on pages 24 to 29 of the present description correspond to the claims of European patent application no. 99963653.3 as filed. The claims of the present application as filed, which is divided from European patent application no. 99963653.3, can be found on the subsequent pages 30 to 31 of the specification which begin with the heading "CLAIMS".

### CLAUSES

1. A housing for use with a water treatment apparatus comprising:
   a hollow elongate tubular member having an interior surface, an open first end, and a closed second end;
   a removable and reengageable end plug having a first end for arrangement adjacent the open first end of the tubular member and a cylindrical body sized and arranged for slidable engagement within the open first end of the tubular member thereby closing the open first end;
   and retaining means including:
      at least one removable and reengageable elongate retaining member;
      at least one hole extending laterally through the body of the end plug adjacent the first end thereof and sized to receive the at least one elongate retaining member therethrough;
      at least one hole extending laterally through the tubular member and sized to receive the at least one removable and reengageable elongate retaining member therethrough;
      the at least one removable and reengageable elongate retaining member being arranged such that it extends through the at least one hole in the tubular member and the at least one hole in the body of the end plug thereby securing the end plug against longitudinal and rotational motion relative to the tubular member.
2. The housing in accordance with Clause 1 wherein the end plug includes a second end for arrangement within the tubular member facing the closed second end of the tubular member, said second end having a convexly curved face.
3. The housing in accordance with Clause 1 wherein the cylindrical body of the removable and reengageable end plug includes an outer cylindrical surface arranged to slidably engage the interior surface of the tubular member, and a pair of grooves extending around the outer cylindrical surface, each groove being arranged to receive a sealing ring for engaging between the interior surface of the tubular member and the outer cylindrical surface of the end plug thereby preventing pressurized water from passing therebetween.
4. The housing in accordance with Clause 1 wherein the removable and reengageable end plug includes a product water outlet port extending longitudinally through the end plug from the first end to the second end thereof.
5. The housing in accordance with Clause 1 wherein the end plug and tubular member are formed of a resilient plastics material.
6. The housing in accordance with Clause 5 wherein the resilient material is high density polyethylene.
7. A housing for use with a water treatment apparatus comprising:
   a cylindrical membrane element having a first end, a second end, and an outer surface;
   a hollow elongate tubular member having an interior surface surrounding the membrane element, an open first end adjacent the first end of the membrane element, and a closed second end adjacent the second end of the membrane element;
   a removable and reengagable closing means arranged at the open first end of the tubular member for closing the open first end;
   retaining means for retaining the closing means at the open first end of the tubular member;
   a first port for communication of water therethrough arranged to extend through the tubular member adjacent the first end of the tubular member;
   a second port for communication of water therethrough arranged to extend through the tubular member adjacent the second end of the tubular member;
   a first seal arranged around the membrane element adjacent one of the first or second ends thereof, such that water entering the corresponding one of the first or second ports adjacent the seal must pass through the membrane element from said one of the first or second ends of the membrane element to the other one of the first or second ends of the membrane element and around the membrane element between the outside surface of the membrane element and the interior surface of the tubular member thereby substantially equalizing a water pressure inside the membrane element with a water pressure outside the membrane element.
8. The housing in accordance with Clause 7 including:
   a third port for communication of water therethrough arranged to extend through the tubular member and spaced from the first port in a direction towards the second end of the tubular member;
   a fourth port for communication of water therethrough arranged to extend through the tubular member and spaced from the second port in a direction towards the first end of the tubular member;
   and a second seal arranged around the membrane element adjacent the second end thereof and lying between the second port and the fourth port of the tubular member such that the seal prevents water entering the second port from passing around the membrane element between the outside surface of the membrane element and the interior surface of the tubular member and exiting through the third and fourth ports;
   the first seal being arranged around the membrane element adjacent the first end thereof and between the first port and the third port of the tubular member such that the seal prevents water entering the first port from passing around the membrane element between the outside surface of the membrane element and the interior surface of the tubular member and exiting through the third and fourth ports;
   the third and fourth ports being arranged to communicate pressurized water having a pressure substantially equal to that of the water passing through the first and second ports to an interior of the tubular member thereby equalizing a water pressure inside the membrane element with a water pressure outside the membrane element.
9. The housing in accordance with Clause 8 wherein the first and second seals are o-ring seals.
10. The housing in accordance with Clause 7 including a resilient spacer arranged at each of the first and second ends of the membrane element such that a first one of the resilient spacers engages the first end of the membrane element and the removable and reengageable end plug and such that a second one of the resilient spacers engages the second end of the membrane element and the second end of the housing.
11. The housing in accordance with Clause 7 wherein the tubular member has an inside diameter and wherein the closed second end of the tubular member comprises an end cap sized to have an inside diameter smaller than the inside diameter of the tubular member thereby creating a shoulder inside the housing for supporting the membrane element.
12. A housing for use with a water treatment apparatus comprising:
   a submersible pump having a first end, a second end, an inlet, an outlet, and a body;
   a hollow elongate tubular member containing the pump therein having an interior surface, an open first end, and a closed second end and defining a longitudinal center line extending longitudinally through the tubular member;
   a removable and reengageable closing means arranged at the open first end of the tubular member for closing the open first end;
   retaining means for retaining the closing means at the open first end of the housing;
   a first port for communication of water therethrough arranged to extend through the tubular member adjacent the first end of the tubular member;
   a second port for communication of water therethrough arranged to extend through the tubular member adjacent the second end of the tubular member;
   and a baffle plate and centering ring assembly for securing the pump within the tubular member along the longitudinal centre line thereof such that the pump is spaced from the closing means towards the second end of the tubular member with the inlet of the pump positioned to receive water from an area from between the baffle plate and centering ring assembly and the second end of the tubular member, and the outlet of the pump positioned to lie between the baffle plate and centering ring assembly and the first end of the tubular member.
13. The housing in accordance with Clause 12, wherein the baffle plate and centering ring assembly comprises:
   an inner ring arranged concentric to the tubular member having a first end and an inner diameter sized to engage around the body of the pump thereby securing the pump on the longitudinal centre line of the tubular member;
   a circular conical wall arranged concentric with and spaced outwards from the inner ring, said conical wall including:
      a first end aligned with the first end of the inner ring, said first end having an outer diameter sized such that it engages the inner surface of the tubular member preventing water from passing between the first end of the conical wall and the interior surface of the tubular member and thereby from entering the pump inlet;
      a second end arranged between the pump inlet and the second end of the pump and having an inner diameter sized to surround the body of the pump leaving a small gap therebetween, said gap allowing water adjacent the longitudinal centre line of the tubular member to pass between the second end of the conical wall and the pump body and thereby enter the pump inlet;
      and, means for connecting the inner ring to the conical wall.
14. The housing in accordance with Clause 13, wherein the means for connecting the inner ring to the conical wall comprise a plurality of webs spaced angularly apart and arranged to extend between an inner surface of the conical wall and the inner ring thereby fixing the inner ring to the conical wall.
15. The housing in accordance with Clause 12, wherein the baffle plate and centering ring assembly is arranged within the tubular member such that the first end of the baffle plate and centering ring assembly is arranged to face the first end of the tubular member and lies between the first port and second port and such that the second end of the baffle plate and centering ring assembly is arranged to face the second end of the tubular member dividing the interior of the tubular member into two portions thereby providing a separation chamber in the portion between the baffle plate and centering ring assembly and the second end of the tubular member.
16. The housing in accordance with Clause 15, wherein the separation chamber is sized and arranged to reduce a pressure and velocity of the contaminated water entering the separation chamber a predetermined amount, and pass said contaminated water through the separation chamber over a predetermined time thereby causing contaminants in the water to precipitate out reducing the contaminants in said water.
17. The housing in accordance with Clause 12 including a third port for communication of water therethrough arranged to extend through the tubular member adjacent the second end of the tubular member and spaced from the second port in a direction towards the first end of the tubular member between the baffle plate and centering ring assembly and the second port, said third port extending through the tubular member at a compound angle such that water entering the tubular member through the third port is directed around the interior surface of the tubular member and towards the first end thereof thereby forming a vortex within the housing and causing centrifugal forces to be developed on the contaminated water enhancing separation of the contaminants and water.
18. The housing in accordance with Clause 17 wherein the compound angle comprises a 22 degree angle directed towards the interior surface of the tubular member and a 22 degree angle directed towards the first end of the tubular member.
19. The housing in accordance with Clause 16 including a third port for communication of water therethrough arranged to extend through the tubular member adjacent the second end of the tubular member and spaced from the second port in a direction towards the first end of the tubular member between the baffle plate and centering ring assembly and the second port, said third port extending through the tubular member at a compound angle such that water entering the tubular member through the third port is directed around the interior surface of the tubular member and towards the first end thereof thereby forming a vortex within the housing and causing centrifugal forces to be developed on the contaminated water enhancing separation of the contaminants and water.
20. The housing in accordance with Clause 19 wherein the compound angle comprises a 22 degree angle directed towards the interior surface of the tubular member and a 22 degree angle directed towards the first end of the tubular member.

## Claims

1. A housing for use with a water treatment apparatus comprising:
a cylindrical membrane element having a first end, a second end, and an outer surface;
a hollow elongate tubular member having an interior surface surrounding the membrane element, an open first end adjacent the first end of the membrane element, and a closed second end adjacent the second end of the membrane element;
a removable and reengagable closing means arranged at the open first end of the tubular member for closing the open first end;
retaining means for retaining the closing means at the open first end of the tubular member;
a first port for communication of water therethrough arranged to extend through the tubular member adjacent the first end of the tubular member;
a second port for communication of water therethrough arranged to extend through the tubular member adjacent the second end of the tubular member;
a first seal arranged around the membrane element adjacent one of the first or second ends thereof, such that water entering the corresponding one of the first or second ports adjacent the seal must pass through the membrane element from said one of the first or second ends of the membrane element to the other one of the first or second ends of the membrane element and around the membrane element between the outside surface of the membrane element and the interior surface of the tubular member thereby substantially equalizing a water pressure inside the membrane element with a water pressure outside the membrane element.

2. The housing in accordance with Claim 1 including:
a third port for communication of water therethrough arranged to extend through the tubular member and spaced from the first port in a direction towards the second end of the tubular member;
a fourth port for communication of water therethrough arranged to extend through the tubular member and spaced from the second port in a direction towards the first end of the tubular member;
and a second seal arranged around the membrane element adjacent the second end thereof and lying between the second port and the fourth port of the tubular member such that the seal prevents water entering the second port from passing around the membrane element between the outside surface of the membrane element and the interior surface of the tubular member and exiting through the third and fourth ports;
the first seal being arranged around the membrane element adjacent the first end thereof and between the first port and the third port of the tubular member such that the seal prevents water entering the first port from passing around the membrane element between the outside surface of the membrane element and the interior surface of the tubular member and exiting through the third and fourth ports;
the third and fourth ports being arranged to communicate pressurized water having a pressure substantially equal to that of the water passing through the first and second ports to an interior of the tubular member thereby equalizing a water pressure inside the membrane element with a water pressure outside the membrane element.

3. The housing in accordance with Claim 2 wherein the first and second seals are o-ring seals.

4. The housing in accordance with any one of Claims 1, 2 or 3,including a resilient spacer arranged at each of the first and second ends of the membrane element such that a first one of the resilient spacers engages the first end of the membrane element and the removable and reengageable end plug and such that a second one of the resilient spacers engages the second end of the membrane element and the second end of the housing.

5. The housing in accordance with any one of Claims 1 to 4, wherein the tubular member has an inside diameter and wherein the closed second end of the tubular member comprises an end cap sized to have an inside diameter smaller than the inside diameter of the tubular member thereby creating a shoulder inside the housing for supporting the membrane element.
